# EUROPEAN PATENT SPECIFICATION

(11) **EP 0 398 058 B1**
(45) Date of publication and mention of the grant of the patent: **12.06.1996**
(21) Application number: 90108114.1
(22) Date of filing: 27.04.1990
(51) Int. Cl.: G21C 3/33

(54) **Nuclear fuel assembly with expandable top nozzle subassembly**
Kopfstück mit ineinanderschiebbarer Baustruktur für Kernbrennelement
Embout supérieur à structure telescopique d'un assemblage de combustible nucléaire

(30) Priority: 17.05.1989 US 353303
(43) Date of publication of application: 22.11.1990
(73) Proprietor: WESTINGHOUSE ELECTRIC CORPORATION, Pittsburgh Pennsylvania 15222 (US)
(72) Inventor: Sparrow, James Alan, Columbia, South Carolina 29212 (US); Lee, Yu Chung, Columbia, South Carolina 29223 (US)
(74) Representative: Gallo, Wolfgang, Dipl.-Ing. (FH)

(56) References cited:
- GB-A- 2 163 888
- US-A- 4 534 933
- US-A- 4 828 792
- US-E- 31 583

## Description

The present invention relates generally to fuel assemblies for nuclear reactors and, more particularly, to a top nozzle sub-assembly therefor.

In most nuclear reactors, the reactor core comprises of a large number of elongate fuel assemblies which receive support and alignment from upper and lower transversely extending core support plates which are directly or indirectly attached to a support barrel surrounding the entire core and extending between the ends thereof.

Typically, each fuel assembly includes a plurality of fuel rods and control rod guide thimbles held in an organized array by transverse grids spaced along the fuel assembly and attached to the control rod guide thimbles, the latter extending somewhat beyond the upper and lower ends of the fuel rods. At its upper and lower ends, the fuel assembly has end structures, also known as top and bottom nozzles, which are connected to the guide thimbles so as to form therewith an integral structure. In the reactor, the fuel assemblies are supported upright on the lower core support plate but ordinarily are not secured thereto in order to facilitate their handling and installation.

The temperatures in the core tend to vary greatly at various times during reactor operation, such as from cold shutdown to normal operating conditions. Moreover, different materials exhibit different irradiation and thermal growth characteristics. Since the fuel assembly components are generally made of materials which are different from those used in the core support barrel and undergo greater thermal expansion, the resulting increase in length of the fuel assemblies must be accommodated, for which reason the fuel assemblies usually are not rigidly attached to the upper and lower core plates but cooperate therewith in a manner permitting some relative motion therebetween.

Conventionally, the axial thermal expansion differential between the fuel assemblies and the core support barrel is accommodated by ensuring that the axial spacing between the upper and lower core support plates is somewhat greater than the axial length of the fuel assemblies. Normally, this is accomplished by providing an axial gap between the top of the fuel assemblies and the upper core support plate. Of course, the presence of such gap would make it possible for the upwardly flowing reactor coolant to hydraulically lift the fuel assemblies and cause them to impact against the upper core support plate. In order to avoid this, it is customary to provide the top nozzles of fuel assemblies with hold-down devices which prevent the fuel assemblies from impacting against the upper core support plate while, at the same time, allowing for changes in fuel assembly length due to coreinduced thermal expansion and the like. Fuel assemblies employing such hold-down devices are disclosed in U.S. Patents No. Re. 31,583, No. 4,078,967, No. 4,534,933 corresponding to EP-A-0 138 606, No. 4,620,960, and No. 4,670,213, for example.

As mentioned above, the guide thimbles of fuel assemblies extend slightly beyond the upper and lower ends of the fuel rods. Consequently, the top and bottom nozzles of the fuel assemblies, which are attached to opposite end portions of the guide thimbles, are spaced respectively above and below the fuel rod ends, and it is this spacing which allows for the increase in length of the fuel rods due to growth occurring as fuel rod burnup progresses during normal reactor operation.

Improvements in various aspects of fuel assembly design have made it possible to increase the allowable burnup of nuclear fuel rods, which is desirable because it reduces the frequency of plant shutdowns and the buildup of spent fuel. However, in order to permit the fuel rods to operate to a higher burnup, an increase of approximately 1.25cm minimum in fuel rod length is necessary due to extra growth. This necessitates an increase in the space between the adapter plates of the top and bottom nozzles to accommodate this additional fuel rod growth. At the same time, there still must be enough space between the top plate and adapter plate of the top nozzle to allow handling equipment for the core to get between the plates and latch onto the underside of the top plate of the top nozzle.

Currently, there is not enough room between the adapter plates of the top and bottom nozzles to permit additional growth in fuel rod length. Therefore, the invention has for its principal object to provide a way of accommodating extra fuel rod thermal growth without impairing the handling capability of the core equipment currently in use.

Accordingly, the invention resides in a top nozzle subassembly as defined in the appended main claim or any of the subordinate claims depending therefrom. The precharacterizing features of claim 1 in their combination are known from US-Patent 4 828 792 corresponding to EP-A-0 214 895, issued just a couple of days prior to the priority date of the application. However, that US-Patent deals with a different problem, namely to take the hydraulic thrust on the fuel assembly under better conditions than in the past, particular in that the forces to be transmitted by a resilient means are reduced.

The top nozzle subassembly according to the invention will enable a fuel assembly utilizing it to accommodate fuel rod growth in excess of 2.5cm, thereby allowing the reactor to operate at a higher burnup rate and permitting the fuel rods to be pushed to burnups greatly in excess of those used today. Moreover, where extremely high burnups are not required, the mechanical duty of the fuel rods can be reduced significantly. Actually, the invention makes use of what in a conventional top nozzle is "dead space" between its top plate and lower adapter plate. This space is characterized as "dead" since it is utilized only during the installation and removal of the fuel assembly and at all other times during core operation is not used. Thus, the expandable (and compressible) top nozzle subassembly of the invention provides for the additional fuel rod growth space needed, yet it also permits the continued use of current handling systems and thereby eliminates the need for design changes potentially resulting in additional costs to customers.

A preferred embodiment of the invention will now be described, by way of example only, with reference to the accompanying drawings, in which:-
Fig. 1 is a partially sectioned elevational view, with parts being broken away for clarity, of a fuel assembly utilizing an expandable top nozzle subassembly embodying the invention;
Fig. 2 is an enlarged top plan view of the fuel assembly, as seen along line 2--2 in Fig. 1;
Fig. 3 is an enlarged sectional view of the fuel assembly as taken along line 3--3 in Fig. 1;
Fig. 4 is a top plan view of an upper structure of the expandable top nozzle subassembly;
Fig. 5 is a sectional view of the upper structure as taken along line 5--5 in Fig. 4;
Fig. 6 is a sectional view of a sidewall enclosure of the upper structure as taken along line 6--6 in Fig. 5;
Fig. 7 is a bottom plan view of the upper structure, as seen along line 7--7 in Fig. 5;
Fig. 8 is a top plan view of the adapter plate of the expandable top nozzle subassembly;
Fig. 9 is a side elevational view of the adapter plate as seen along line 9--9 in Fig. 8;
Fig. 10 is an enlarged sectional view of the right-hand edge portion of the adapter plate shown in Fig. 9;
Fig. 11 is a fragmentary sectional view of the fuel assembly, as taken along line 11--11 in Fig. 2, which shows the top nozzle subassembly in an expanded condition; and
Fig. 12 is a fragmentary sectional view of the fuel assembly similar to Fig. 11 but illustrating the top nozzle subassembly in a compressed condition.

In the following description, like references characters designate like or corresponding parts throughout the several views, and terms such as "forward", "rearward", "left", "right", "upward", "downward", and the like are used words of convenience not to be construed as limiting terms.

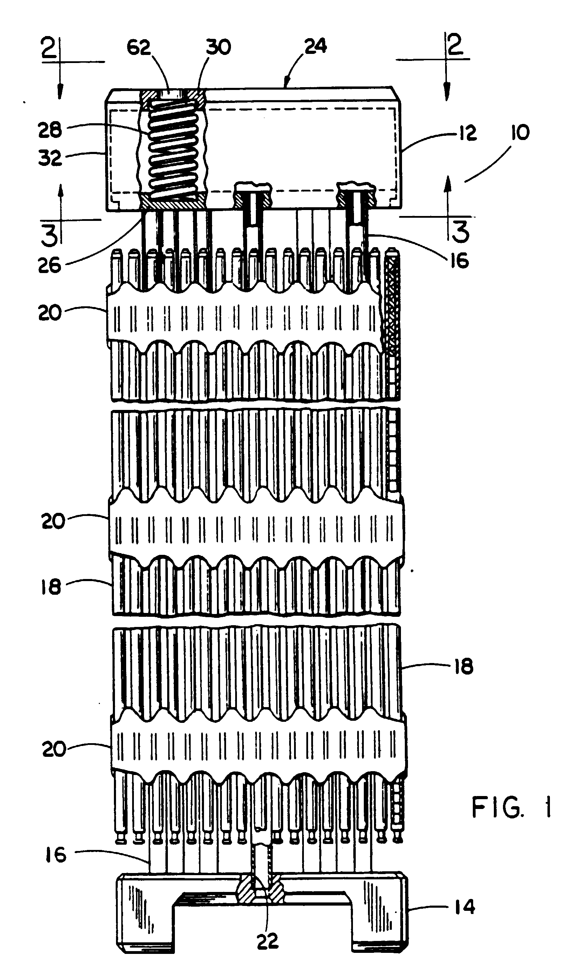

Referring now to the drawings, and particularly to Fig. 1 thereof, the fuel assembly illustrated therein and generally designated with reference numeral 10 utilizes an expandable top nozzle subassembly 12 embodying the invention, and, in addition, basically includes a bottom nozzle 14 for supporting the fuel assembly on the lower core support plate (not shown) in the core region of a nuclear reactor (not shown), control-rod guide tubes or thimbles 16 attached to, and extending upright between, the bottom nozzle 14 and top nozzle subassembly 12, an organized array of fuel rods 18 held in spaced relationship with respect to one another by means of transverse grids 20 spaced along the fuel assembly and attached to the guide thimbles 16, and an instrumentation tube 22 located at the center of the fuel assembly 10. The top nozzle subassembly 12, the bottom nozzle 14, and the guide thimbles 16 together form an integral assembly capable of being conventionally handled without damage to the assembly parts.

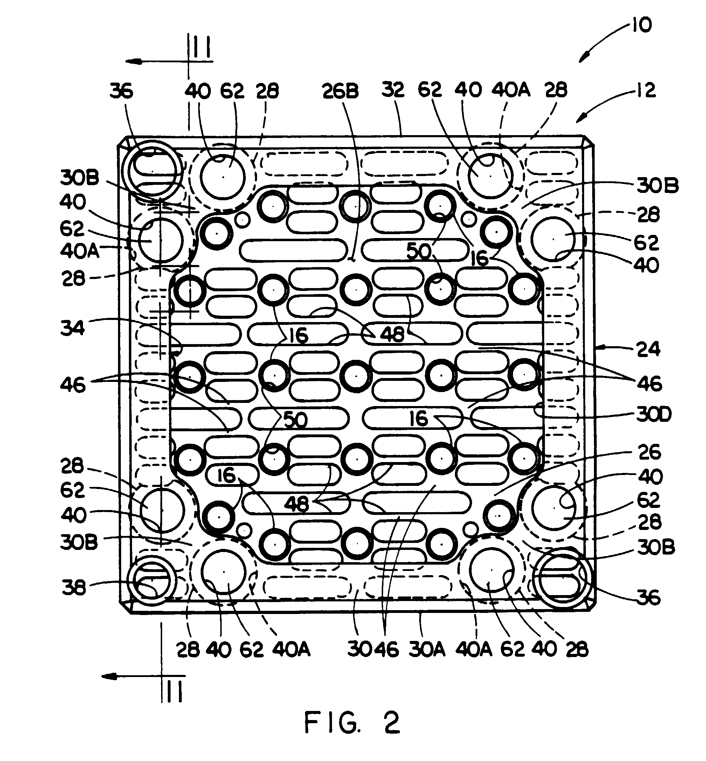

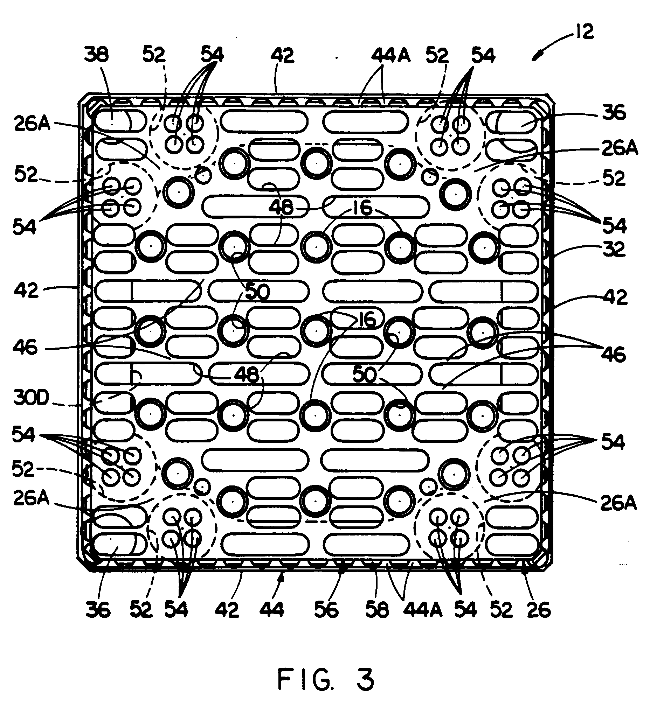

Referring to Figs. 1-3, the expandable top nozzle subassembly 12 of the invention has a construction which permits improved utilization of space for accommodating greater growth of fuel rods 18 and higher fuel rod burnup. Furthermore, the top nozzle subassembly 12 permits continued use of a conventional handling system for installing and removing the fuel assembly 10 in and from the reactor core. Basically, the expandable top nozzle subassembly 12 comprises an upper structure 24, a lower adapter plate 26, and a plurality of resiliently yieldable biasing devices 28.

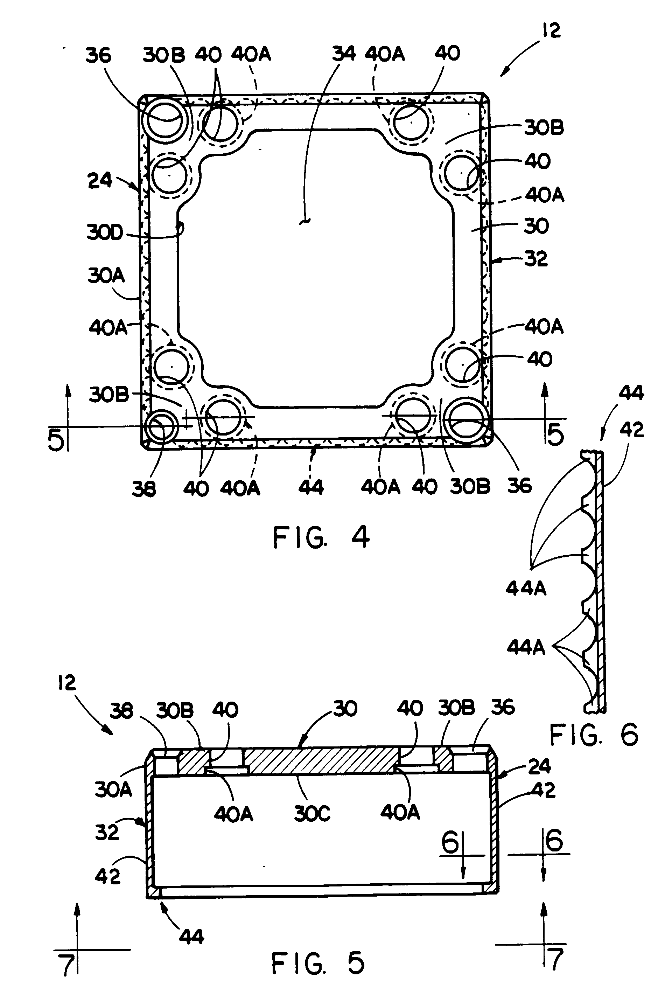

As shown alone and in greater detail in Figs. 4-7, the upper structure 24 of the top nozzle subassembly 12 consists of a top plate 30 and a sidewall enclosure 32 rigidly connected to and depending from the outer peripheral edge 30A of the top plate 30. The top plate 30 has a generally square annular configuration defining a large central opening 34. Each of two diagonal corner portions 30B of the top plate 30 has a hole 36 formed therein which permits components of the fuel assembly handling system (not shown) to be inserted therethrough and engaged with the lower surface 30C of the top plate 30 for the purpose of lifting the fuel assembly 10 during installation thereof in or removal thereof from the reactor core. Another corner portion 30B of the top plate 30 has a hole 38 providing a reference for properly orientating the fuel assembly 10 in the core, and each corner portion 30B of the top plate 30 has formed therein a pair of holes 40 each of which is countersunk so as to form an annular recess 40A around it in the lower surface 30C of the top plate.

The sidewall enclosure 32 of the upper structure 24 has a generally square, box-like configuration in that it consists of four generally planar vertical wall portions 42 rigidly interconnected at their opposite vertical edges. At the lower peripheral edge of the sidewall enclosure 32, each wall portion 42 has a narrow inwardly projecting retaining structure 44 composed of a series of tabs or fingers 44A which are spaced apart so as to lend to the retaining structure a generally scalloped or serrated configuration.

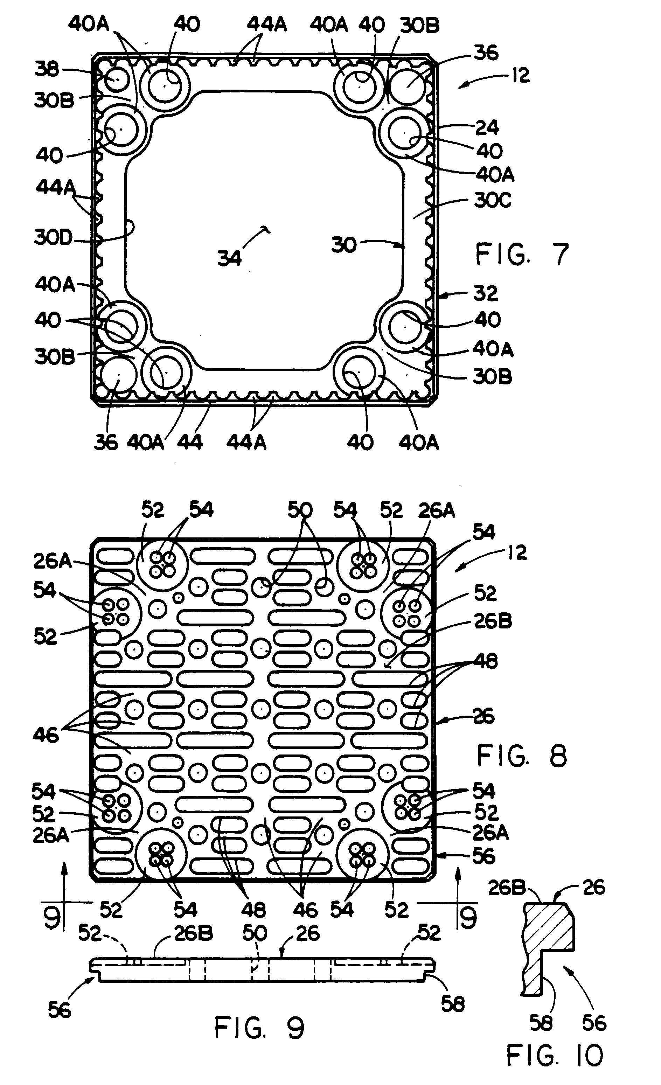

As shown alone and in greater detail in Figs. 8-10, the lower adapter plate 26 of the top nozzle subassembly 12 is of generally square configuration and flat construction. It is formed of a plurality of cross-laced ligaments or bars 46 defining a plurality of coolant flow openings 48 of oblong shapes. The adapter plate 26 has formed therein also circular through-holes 50 which correspond in number and pattern to the guide thimbles 16 and are of a size enabling them to receive upper end portions of the guide thimbles 16 upon installation of the top nozzle subassembly on the guide thimbles. Furthermore, the adapter plate 26 is provided at each corner portion 26A thereof with a pair of circular recesses 52 formed in the upper surface 26B of the adapter plate in vertical alignment with the respective pairs of holes 40 and annular recesses 40A of the top plate 24. Coolant flow openings 54 arranged in a generally square pattern extend through the adapter plate 26 from each recess 52. The outer peripheral edge of the adapter plate 26 is undercut to define a ledge or seating structure 56 overhanging a continuous peripheral recess or groove 58.

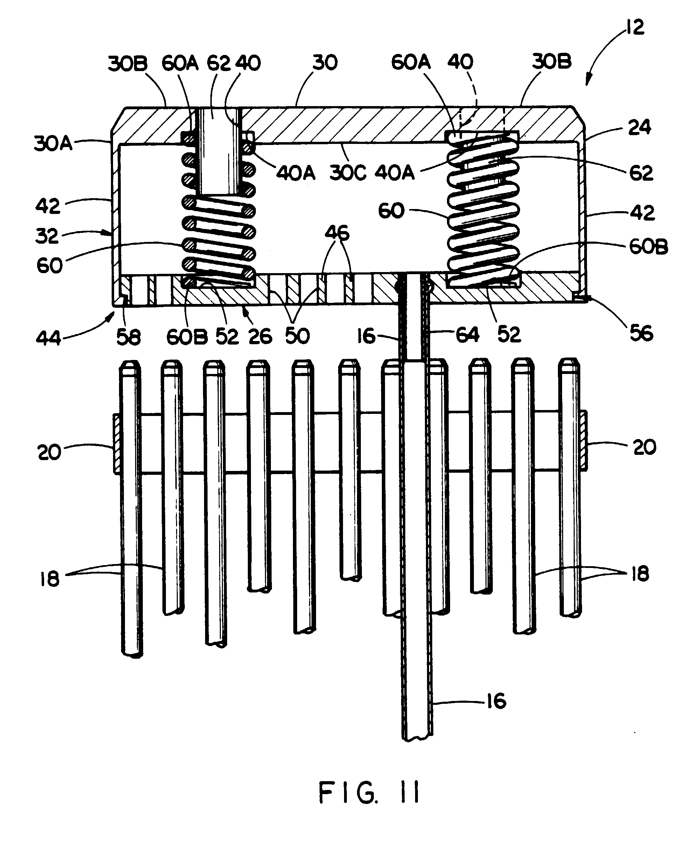

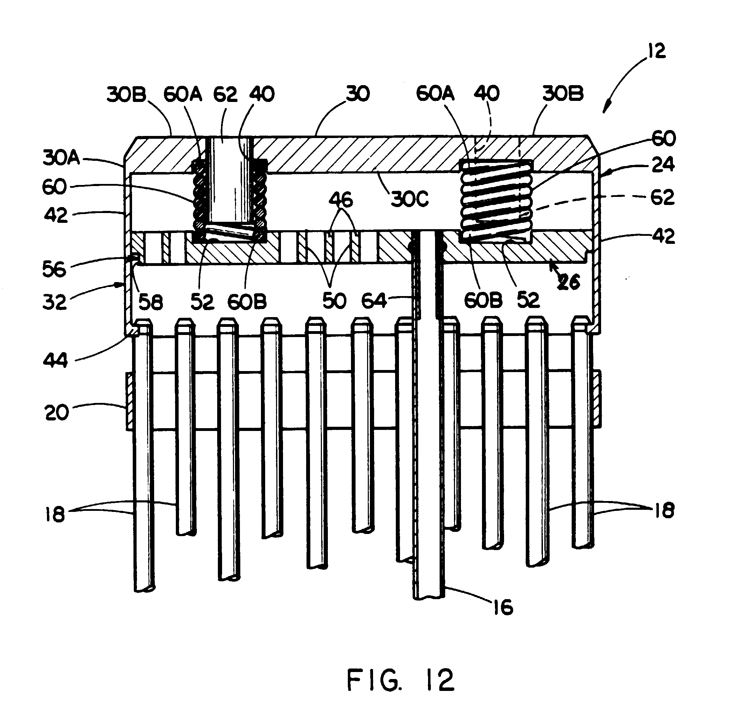

As seen from Figs. 1, 11 and 12, the resiliently yieldable biasing devices 28 take the form of pairs of coil springs 60 seated at their opposite upper and lower ends 60A, 60B in the recesses 40A, 52 formed in the aligned corner portions 30B, 26A of the top plate 30 and the lower adapter plate 26, respectively, and thus located outside of an outer perimeter of the guide thimbles 16 substantially aligned with the inner peripheral edge 30D of the top plate 30 defining the central opening 34 thereof. The top plate 30 has secured thereto stabilizing or guide members 62 in the form of short cylindrical plugs or bars each fitted at its upper end into one of the holes 40 in the top plate 30 and extending therefrom downward axially into the corresponding coil spring 60. The stabilizing members 62 serve to stabilize the springs 60 laterally and to direct their expansion and compression along a generally vertical path. The stabilizing members 62 have a length such that they extend almost halfway into the springs 60 when the latter are expanded, as seen from Fig. 11, and extend almost down to the adapter plate 26 when the springs 60 are compressed, as shown in Fig. 12.

When in use, the adapter plate 26, which is attached to the guide thimbles 26 and securely retained thereon in a conventional manner by means of locking tubes 64, will remain in the same position on the guide thimbles in both the expanded condition (Fig. 11) and the compressed condition (Fig. 12) of the top nozzle subassembly 12. This adapter plate 26 can be placed substantially, e.g. from about 2.54cm (1 inch) to about 3.81cm (1.5 inches), higher above the upper ends of the fuel rods 18 than can the adapter plate of a conventional top nozzle. The adapter plate 26 and the upper structure 24 are not rigidly interconnected but are movable with respect to one another, the adapter plate 26 being axially slidable within the sidewall enclosure 32. The retaining structure 44 of the sidewall enclosure 32 and the seating structure 56 of the adapter plate 26 form interengageable means on the lower edge of the enclosure 32 and on a peripheral edge of the adapter plate 26, which means cooperate to prevent separation of the adapter plate 26 and the upper structure 24 from one another.

The top nozzle subassembly 12 assumes its expanded condition (Fig. 11) when the upper core support plate (not shown) bearing down upon the top plate 30 of the upper structure 24 of the top nozzle subassembly is lifted off and removed, thereby enabling the coil springs 60 to expand and to force the upper structure 24 upward, i.e. away from the adapter plate 26, until the retaining structure 44 on the lower end of the enclosure 32 engages the seating structure 56 on the adapter plate 26 to arrest further movement of the upper structure 24 under the action of the springs 60. In this position, the adapter plate 26 and top plate 30 are spaced their maximum distance apart and offer ample space enabling components of the fuel assembly handling system to be inserted through the corner holes 36 of the top plate and brought into latching engagement with the latter's underside.

The top nozzle subassembly 12 assumes its compressed condition (Fig. 12) during installation of the upper core support plate (not shown). As the latter is being lowered upon the top plate 30 of the upper structure 24 of the top nozzle subassembly, it pushes the upper structure 24 downward, causing it to slide down over the adapter plate 26 and causing the holddown springs 60 to be compressed, as illustrated in Fig. 12. It will be appreciated that even though the space between the top plate 30 and the adapter plate 26 might now be less than needed to effectively insert lifting components of the fuel assembly handling system, this is immaterial insofar as there is never any need for the fuel assembly to be handled by the system while it is in the reactor core and the upper core support plate is in place. Thus, the extra space which exists between the top plate 30 and the adapter plate 26 when the top nozzle subassembly 12 is in its expanded condition shown in Fig. 11, i.e. which exists at a time when handling of the fuel assembly may be necessary, serves in the subassembly's compressed condition (Fig. 12) to accommodate the adapter plate 26 attached to the guide thimbles 16. Consequently, the distance between the adapter plate 26 and the upper ends of the fuel rods 18 can be greater than in fuel assemblies utilizing conventional top nozzle assemblies, thereby allowing for increased fuel-rod growth and for higher fuel-rod burnup in the core.

In conclusion, it should be noted that the scalloped shape (see Fig. 6) of the retaining structure 44 at the lower end of the enclosure 42 facilitates free movement of the retaining structure past the usual upper closure members, or end plugs, of the fuel rods 18. The central opening 34 in the top plate 30 accommodates control rods (not shown) inserted into the guide thimbles 16 in a usual manner. The coil springs 60 serve to transmit the necessary hold-down force from the upper core plate (not shown) to the adapter plate 26. The number of coil springs 60 employed, and the manner in which they are arranged, offer the advantage of a more even load distribution upon the adapter plate and of thereby helping to prevent fuel assembly bow. Furthermore, the sidewall enclosure 32 of the upper structure 24 of the top nozzle subassembly 12, which completely encloses the hold-down springs 60 in both the expanded condition and the compressed condition of the top nozzle subassembly 12, will protect and shield the springs from any lateral forces imposed by coolant flow. Of course, it will be appreciated that other forms of hold-down devices different from coil springs, such as elongated leaf springs, may be suitable for use with the top nozzle subassembly described above.

## Claims

1. An expandable top nozzle subassembly in or for a nuclear fuel assembly having guide thimbles for receiving control rods, said top nozzle subassembly (12) comprising:
(a) an upper structure (24) including a top plate (30), and a sidewall enclosure (32) rigidly connected to and extending below an outer peripheral edge (30A) of the top plate (30);
(b) an adapter plate (26) disposed below said top plate (30) and within said sidewall enclosure (32) of the upper structure (24), the latter and the adapter plate (26) being movable relative to one another in a direction generally perpendicular to said adapter and top plates (26,30);
(c) a plurality of resiliently yieldable biasing devices (28) disposed within said sidewall enclosure (32) and interposed between said top plate (30) and said adapter plate (26) so as to urge them apart and to transmit a hold-down force, when applied to the top plate, to the adapter plate;
(d) interengageable means (44,56) disposed on the sidewall enclosure (32) and on the adapter plate (26), respectively, and cooperable with each other to retain the adapter plate within the sidewall enclosure (32) and to prevent separation of the upper structure (24) and adapter plate (26) from one another under the action of said biasing devices (28), said interengageble means being disposed on a lower edge of said sidewall enclosure (32) in the form of a retaining structure (44) projecting invards of the side wall enclosure, and on an outer peripheral edge of said adapter plate (26), respectively,
characterized in that
(e) said top plate (30) has an inner peripheral edge (30D) defining a central opening (34) sufficiently large for said control rods (16) to extend therethrough,
(f) said retaining structure (44) is composed of a series of spaced fingers (44A), and
the interengageable means on the outer peripheral edge of said adapter plate (26) is an undercut seating structure (56) extending over said retaining structure (44).

2. An expandable top nozzle subassembly according to claim 1, wherein said top plate (30) has a plurality of corner portions (30B), and at least one recess (40A) formed in the lower surface (30C) of said top plate (30) at each of said corner portions (30B) thereof.

3. An expandable top nozzle subassembly according to claim 2, wherein said adapter plate (26) has a plurality of corner portions (26A), and at least one recess (52) formed in an upper surface (26B) of the adapter plate at each of said corner portions (26A) thereof, each said recess (52) in the adapter plate (26) being aligned with one said recess (40A) in the top plate (30), and said biasing devices (28) comprising coil springs (60) each seated at the opposite ends thereof in an aligned pair of said recesses (40A,52) formed in said top and adapter plates (30,26).

4. An expandable top nozzle subassembly according to claim 3, wherein said adapter plate (26) has flow openings (54) extending therethrough from each of the recesses (52) formed in said upper surface (26B) thereof.

5. An expandable top nozzle subassembly according to claim 3 or 4, wherein said top plate (30) has affixed thereto spring stabilizing members (62) each extending from the lower side of the top plate (30) axially downward into the respective coil spring (60) to provide lateral support thereof.

6. An expandable top nozzle subassembly according to any one of the preceding claims, wherein said sidewall enclosure (32) of the upper structure (24) is composed of substantially planar vertical wall portions (42) rigidly interconnected together at their opposite vertical edges.

## Patentansprüche

1. Expandierbare Kopfstück-Unterbaugruppe in oder für ein Kernbrennelement mit Führungsrohren zur Aufnahme von Steuerstäben, wobei die Kopfstück-Unterbaugruppe (12) aufweist:
a) eine obere Konstruktion (24) mit einer Deckplatte (30), und eine Umfassungsseitenwand (32), die mit dem äußeren Umfangsrand (30A) der Deckplatte (30) starr verbunden ist und von dieser nach unten ragt,
b) eine Adapterplatte (26), die unterhalb der Deckplatte (30) und innerhalb der Seitenwandumfassung (32) der oberen Konstruktion (24) angeordnet ist, wobei die letztere und die Adapterplatte (26) relativ zueinander in einer grundsätzlich senkrechten Richtung mit Bezug auf die Adapter- und die Deckplatte (26, 30) beweglich sind,
c) eine Mehrzahl von elastisch nachgiebigen Vorspannvorrichtungen (28), die innerhalb der Seitenwandumfasssung (32) angeordnet und zwischen der Deckplatte (30) und der Adapterplatte (26) eingebaut sind, um diese auseinanderzudrükken und eine Niederhaltekraft, wenn eine solche auf die Deckplatte ausgeübt wird, auf die Adapterplatte zu übertragen,
d) miteinander in Eingriff bringbare Mittel (44, 56), die an der Seitenwandumfassung (32) und an der Adapterplatte (26) angeordnet sind und miteinander im Sinne einer Rückhaltung der Adapterplatte innerhalb der Seitenwandumfassung (32) und einer Verhinderung einer Trennung der oberen Konstruktion (24) und der Adapterplatte (26) voneinander unter der Wirkung der Vorspannvorrichtungen (28) zusammenwirken können, wobei die miteinander in Eingriff bringbaren Mittel an einem unteren Rand der Seitenwandumfassung (32) in Form einer Rückhaltekonstruktion (44) angeordnet ist, die von der Seitenwandumfassung einwärts vorspringt, bzw. an einem äußeren Umfangsrand der Adapterplatte (26) angeordnet sind, dadurch gekennzeichnet, daß
e) die Deckplatte (30) einen inneren Umfangsrand (30D) aufweist, die eine ausreichend große mittige Öffnung (34) für die hindurchverlaufenden Steuerstäbe (16) bildet,
f) die Rückhaltekonstrukion (44) aus einer Reihe von beabstandeten Fingern (44A) zusammengesetzt ist, und
die miteinander in Eingriff bringbaren Mittel an dem äusseren Umfangsrand der Adapterplatte (26) eine unterschnittene Sitzkonstruktion (56) sind, die sich über die genannte Rückhaltekonstruktion (44) erstreckt.

2. Expandierbare Kopfstück-Unterbaugruppe nach Anspruch 1, wobei die Deckplatte (30) eine Mehrzahl von Eckbereichen (30B) und mindestens eine in der Unterseite (30C) der Deckplatte (30) an jedem ihrer Eckbereiche (30B) gebildete Aussparung (40A) aufweist.

3. Expandierbare Kopfstück-Unterbaugruppe nach Anspruch 2, wobei die Adapterplatte (26) eine Mehrzahl von Eckbereichen (26A) und mindestens eine in der Oberseite (26B) der Adapterplatte in jedem ihrer Eckbereiche (26A) gebildete Aussparung (52) aufweist, wobei jede Aussparung (52) in der Adapterplatte (26) mit einer Aussparung (40A) in der Deckplatte (30) fluchtet und die Vorspannvorrichtungen (28) Schraubenfedern (60) aufweisen, die jeweils mit ihren beiderseitigen Enden in einem fluchtenden Paar von Aussparungen (40A, 52) in der Deckplatte und Adapterplatte (30, 26) sitzen.

4. Expandierbare Kopfstück-Unterbaugruppe nach Anspruch 3, wobei die Adapterplatte (26) Strömungsöffnungen (54) aufweist, die jeweils von der in ihrer Oberseite (26B) gebildeten Aussparung (52) aus hindurchverlaufen.

5. Expandierbare Kopfstück-Unterbaugruppe nach Anspruch 3 oder 4, wobei die Deckplatte (30) daran befestigte Federstabilisierelemente (62) aufweist, die jeweils von der Unterseite der Deckplatte (30) axial abwärts in die entsprechende Schraubenfeder (60) hineinverlaufen, um diese seitlich abzustützen.

6. Expandierbare Kopfstück-Unterbaugruppe nach einem der vorhergehenden Ansprüche, wobei die Seitenwandumfassung (32) der oberen Konstruktion (24) aus im wesentlichen ebenen vertikalen Wandteilen (42) zusammengesetzt ist, die an ihren beiderseitigen vertikalen Rändern starr miteinander verbunden sind.

## Revendications

1. Sous-ensemble d'embout supérieur expansible disposé dans ou destiné à un assemblage combustible nucléaire comportant des tubes-guides pour recevoir des barres de commande, ledit sous-ensemble (12) d'embout supérieur comprenant:
(a) une structure supérieure (24) comprenant une plaque supérieure (30) et une enveloppe formant paroi latérale (32) fixée rigidement au bord périphérique extérieur (30A) de la plaque supérieure (30) et s'étendant en dessous de ce bord;
(b) une plaque d'adaptation (26) disposée en dessous de ladite plaque supérieure (30) et à l'intérieur de ladite enveloppe formant paroi latérale (32) de la structure supérieure (24), cette dernière et la plaque d'adaptation (26) pouvant être déplacées l'une par rapport à l'autre dans une direction perpendiculaire d'une façon générale auxdites plaques d'adaptation et supérieure (26, 30);
(c) une pluralité de dispositifs de sollicitation élastiques (28) disposés à l'intérieur de ladite enveloppe formant paroi latérale (32) et interposés entre ladite plaque supérieure (30) et ladite plaque d'adaptation (26) de manière à écarter celles-ci l'une de l'autre et à transmettre à la plaque d'adaptation une force de maintien en position basse lorsqu'ils prennent appui sur la plaque supérieure;
(d) des moyens de butée complémentaires (44, 56) disposés sur l'enveloppe formant paroi latérale (32) et sur la plaque d'adaptation (26), respectivement, et pouvant coopérer mutuellement de manière à retenir la plaque d'adaptation à l'intérieur de l'enveloppe formant paroi latérale (32) et à empêcher la structure supérieure (24) et la plaque d'adaptation (26) de se séparer l'une de l'autre sous l'action desdits moyens de sollicitation (28), lesdits moyens de butée complémentaires étant disposés sur un bord inférieur de ladite enveloppe formant paroi latérale (32), sous la forme d'une structure de retenue (44) faisant saillie vers l'intérieur de l'enveloppe formant paroi latérale (32), et sur un bord périphérique extérieur de ladite plaque d'adaptation (26), respectivement,
caractérisé en ce que
(e) ladite plaque supérieure (30) comporte un bord périphérique intérieur (30D) définissant une ouverture centrale (34) suffisamment grande pour que lesdites barres de commande (16) s'étendent à travers celle-ci,
(f) ladite structure de retenue (44) est composée d'une série de doigts espacés (44A), et
les moyens de butée complémentaires se trouvant sur le bord périphérique extérieur de ladite plaque d'adaptation (26) constituent une structure d'appui (56) évidée par le dessous et s'étendant en dessus de ladite structure de retenue (44).

2. Sous-ensemble d'embout supérieur expansible selon la revendication 1, dans lequel ladite plaque supérieure (30) comporte une pluralité de parties d'angle (30B) et au moins un évidement (40A) formé dans la surface inférieure (30C) de ladite plaque supérieure (30), dans chacune desdites parties d'angle (30B) de cette dernière.

3. Sous-ensemble d'embout supérieur expansible selon la revendication 2, dans lequel ladite plaque d'adaptation (26) comporte une pluralité de parties d'angle (26A) et au moins un évidement (52) formé dans la surface supérieure (26B) de la plaque d'adaptation dans chacune desdites parties d'angle (26A) de cette dernière, chacun desdits évidements (52) de la plaque d'adaptation (26) étant aligné avec ledit évidement (40A) de la plaque supérieure (30), et lesdits dispositifs de sollicitation (28) comprenant des ressorts hélicoïdaux (60) dont chacun est logé à ses extrémités opposées dans une paire alignée desdits d'évidements (40A, 52) formés dans lesdites plaques supérieure et d'adaptation (30, 26).

4. Sous-ensemble d'embout supérieur expansible selon la revendication 3, dans lequel ladite plaque d'adaptation (26) comporte des ouvertures d'écoulement, (54) qui s'étendent à travers celle-ci depuis chacun des évidements (52) formés dans la surface supérieure (26B) de cette plaque.

5. Sous-ensemble d'embout expansible selon la revendication 3 ou 4, dans lequel des éléments élastiques de stabilisation (62) sont fixés à ladite plaque supérieure (30), chacun s'étendant depuis le côté inférieur de la plaque supérieure (30) axialement vers le bas jusque dans le ressort hélicoïdal respectif (60) pour assurer à ce dernier un support latéral.

6. Sous-ensemble selon l'une quelconque des revendications précédentes, dans lequel ladite enveloppe formant paroi latérale (32) de la structure supérieure (24) est composée de parties de parois verticales (42) sensiblement planes assemblées rigidement ensemble à leurs bords verticaux opposés.
